# EUROPEAN PATENT APPLICATION

(11) **EP 4 821 411 A1**
(43) Date of publication of application: **14.10.2026**
(21) Application number: 24899935.1
(22) Date of filing: 06.12.2024
(51) Int. Cl.: A47J 31/46

(54) **FLOW RESTRICTION DEVICE AND REFRIGERATION APPARATUS**

(30) Priority: 08.12.2023 CN 202311681338
(71) Applicant: QINGDAO HAIER REFRIGERATOR CO., LTD., Qingdao, Shandong 266101 (CN); HAIER SMART HOME CO., LTD., Qingdao, Shandong 266101 (CN)
(72) Inventor: YANG, Jun, Qingdao, Shandong 266101 (CN); ZHANG, Fangyou, Qingdao, Shandong 266101 (CN); BIAN, Xiangsheng, Qingdao, Shandong 266101 (CN); ZUO, Lihua, Qingdao, Shandong 266101 (CN)
(74) Representative: Winter, Brandl - Partnerschaft mbB
(86) International application number: PCT/CN2024/137261
(87) International publication number: WO 2025/119301

(57) **Abstract**

A flow restriction device and a refrigeration apparatus. The flow restriction device comprises a body adapted to be connected to a water container, a flow restriction member located in the body and a fastener located in the body; the body is hollow to form a receiving cavity for accommodating the flow restriction member and the fastener; the flow restriction member is provided with a flow channel passing through the flow restriction member in a vertical direction for a water flow to pass through; the diameter of an inlet end of the flow channel located on the upper side is larger than the diameter of an outlet end thereof located on the lower side; the fastener is used for fastening a water pipe into the flow restriction device. According to the flow restriction device and the refrigeration apparatus, the flow restriction device can be quickly connected to a water pipe, and change the flow rate and flow velocity of water.

## Description

### CROSS REFERENCE TO RELATED APPLICATIONS

This application is based on a Chinese patent application with application number 202311681338.3 and filing date of December 8, 2023, and claims priority to the Chinese patent application, the entire content of the above patent application is incorporated herein by reference.

### TECHNICAL FIELD

The present application relates to a flow restriction device and a refrigeration apparatus.

### BACKGROUND

The main function of a conventional refrigeration apparatus is to refrigerate and freeze food. When a user needs cold water, the user typically fills a water container with water, places the water container inside the refrigeration apparatus, waits for the water to cool, then takes the water container out, and puts the water container back into the refrigeration apparatus after use. Such use is not only troublesome, time-consuming, and laborious, but also wastes energy if the cooled water is not used promptly.

As shown in Chinese Utility Model Patent Publication No. CN219199691U, embedding various kitchen appliances into a refrigeration apparatus is currently a development trend for high-end refrigeration apparatuses. A water dispenser function is a common feature of high-end refrigeration apparatuses. However, in refrigeration apparatuses with water dispensers on the market, the water storage device of the water dispenser is generally a water tank, which stores a water source for use. In a refrigeration apparatus with a water dispenser, a water container is installed on a door body. When opening or closing the door and during movement of the water container, water inside the water container may splash out. Therefore, a structure for increasing a path for water overflow is designed at a water spout to prevent water splashing. However, the structure also leads to another problem: during automatic water filling, when the flow rate is high, the water cannot reach the water container in time, accumulates at the water spout, and overflows.

In view of the foregoing, improving the existing flow restriction device and refrigeration apparatus is necessary to solve the above problems.

Any related art mentioned in this specification does not constitute an admission or suggestion that such related art forms part of the common general knowledge in any jurisdiction, nor does it imply that such related art can be reasonably expected to be understood, considered relevant, and/or combined with other related art by a person skilled in the art.

### SUMMARY

An object of the present application is to provide a flow restriction device and a refrigeration apparatus, which enable quick insertion of a water pipe and can change the flow rate and flow velocity of water.

To achieve one of the above objects, an embodiment of the present application provides a flow restriction device, comprising: a body configured to be connected to a water container; a flow restriction member located in the body; and a fastener located in the body. The body is hollow to form a receiving cavity for accommodating the flow restriction member and the fastener. The flow restriction member has a flow channel formed therethrough along an up-to-down direction for water flow to pass through. The flow channel has an aperture diameter at an upper inlet end that is larger than an aperture diameter at a lower outlet end. The fastener is configured to snap-connect a water pipe in the flow restriction device.

To achieve one of the above objects, the present application further provides a refrigeration apparatus, comprising the flow restriction device and a water container connected to the flow restriction device.

Compared with the prior art, the beneficial effect of the present application is: the flow restriction device and the refrigeration apparatus of the present application achieve control over the flow rate and velocity of water, prevent splashing and overflowing of water at a spout of the water container, and realize quick insertion of the water pipe by arranging the flow restriction member and the fastener in the receiving cavity of the body, setting the aperture diameter of the inlet end of the flow channel of the flow restriction member larger than the aperture diameter of the outlet end, and using the fastener to snap-connect the water pipe in the flow restriction device.

### BRIEF DESCRIPTION OF DRAWINGS

FIG. 1 is a schematic view of a refrigeration apparatus according to the present application;
FIG. 2 is a perspective view of the flow restriction device of the refrigeration apparatus shown in FIG. 1;
FIG. 3 is an exploded perspective view of the flow restriction device shown in FIG. 2;
FIG. 4 is a view of the flow restriction device shown in FIG. 3 from another perspective;
FIG. 5 is a partial assembly view of the flow restriction device shown in FIG. 3;
FIG. 6 is a cross-sectional view of the flow restriction device shown in FIG. 2; and
FIG. 7 is a cross-sectional view of a second positioning member of the flow restriction device shown in FIG. 2.

### DETAILED DESCRIPTION OF EMBODIMENTS

The present application will be described in detail below with reference to embodiments shown in the accompanying drawings. However, the embodiments do not limit the present application, and structural, methodological, or functional variations made by those of ordinary skill in the art based on the embodiments are included within a protection scope of the present application.

Terms indicating spatial relative positions such as "upper", "lower", "left", "right", "front", "rear", etc. used herein are for a purpose of facilitating description to describe a relationship of one feature relative to another feature as shown in the drawings. It can be understood that according to different placement positions of a product, the terms of spatial relative positions can be intended to include different orientations other than the orientations shown in the drawings, and should not be understood as limitations to the claims. In addition, a descriptive term "horizontal" used herein is not completely equivalent to being along a direction perpendicular to gravity, and allows for a certain degree of inclination.

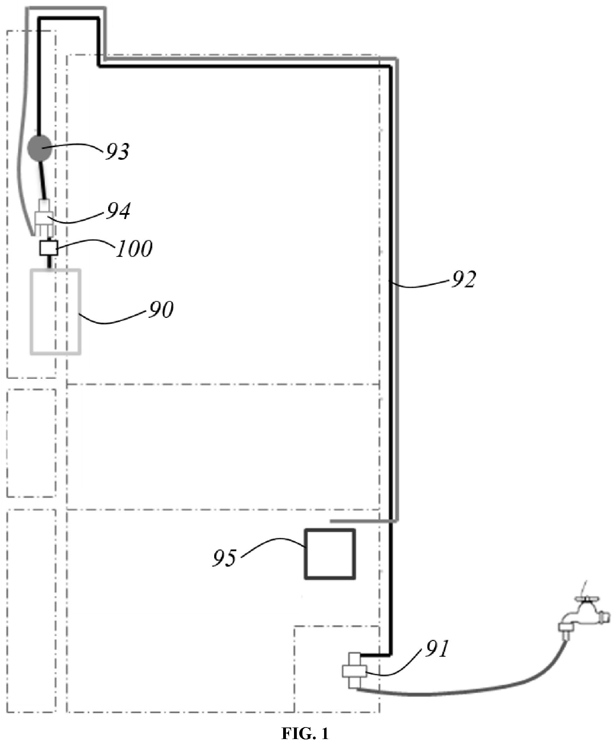

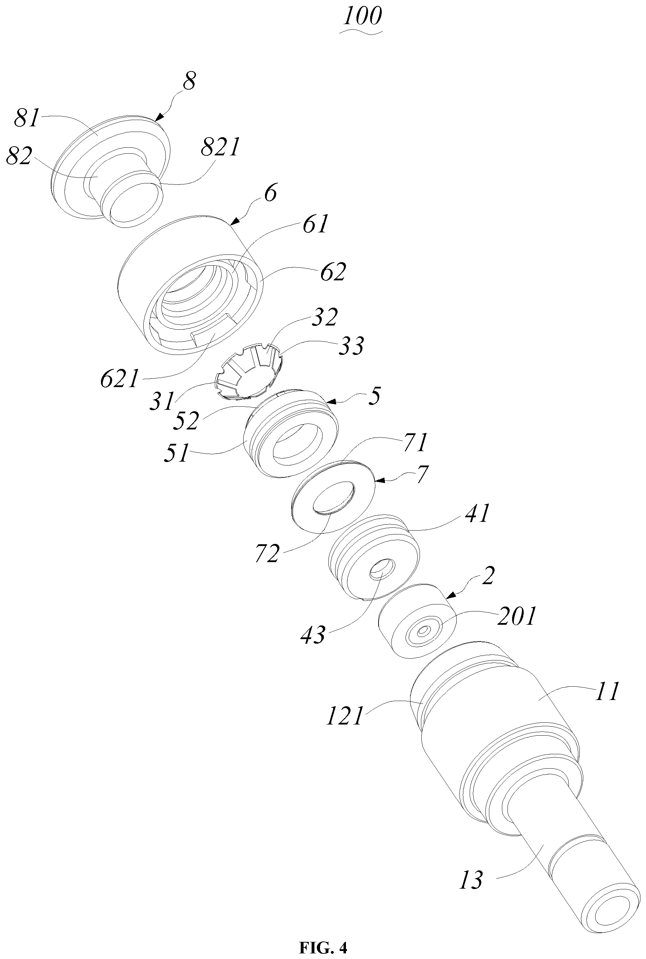

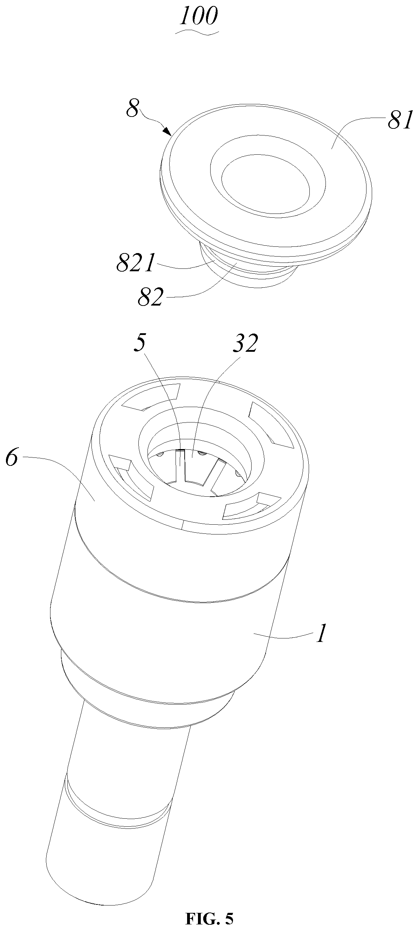

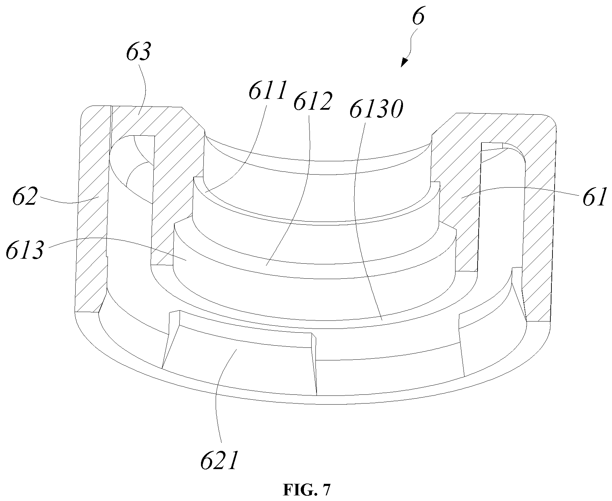

Please refer to FIG. 1 to FIG. 7, which show schematic views of a refrigeration apparatus according to the present application. The refrigeration apparatus comprises a flow restriction device 100 and a water container 90 connected to the flow restriction device 100.

In one embodiment, the refrigeration apparatus further comprises a main water valve 91, a main water supply pipeline 92, a filter 93, a water distribution valve 94, and an ice-making device 95. The water container 90 is a water-using device arranged on a door body. The main water valve 91 is arranged in a compressor compartment and is located in the main water supply pipeline 92, configured to control the on/off state of the main water supply pipeline 92. The filter 93 is connected to a water outlet end of the main water supply pipeline 92, configured to filter the incoming water for direct consumption or use. The water distribution valve 94 is connected to the filter 93, configured to distribute the water filtered by the filter 93 to the water container 90 and the ice-making device 95. The ice-making device 95 freezes the water diverted by the water distribution valve 94 to provide clean ice cubes for a user.

In the present application, the filter 93, the water distribution valve 94, and the water container 90 are arranged sequentially from top to bottom. The flow restriction device 100 is arranged between the water distribution valve 94 and the water container 90 to restrict the flow rate and velocity of water entering the water container 90, thereby ensuring that water does not splash or accumulate at a spout of the water container 90, thus enabling automatic water filling.

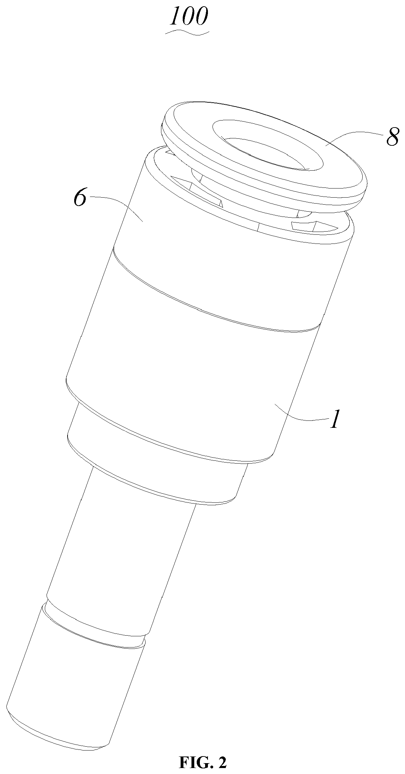

Please refer to FIG. 2 to FIG. 7, the flow restriction device 100 comprises a body 1 for connecting to the water container 90, a flow restriction member 2 located in the body 1, and a fastener 3 located in the body 1. The body 1 is hollow to form a receiving cavity 10 for accommodating the flow restriction member 2 and the fastener 3. The flow restriction member 2 has a flow channel 20 formed therethrough along an up-to-down direction for water flow to pass through. The flow channel 20 has an aperture diameter of an inlet end on an upper side that is larger than an aperture diameter of an outlet end on a lower side. The fastener 3 is used for clamping a water pipe in the flow restriction device 100. Thus, control over the flow rate and velocity of water and prevention of splashing and overflowing of water at the spout of the water container 90 are achieved by means of the flow channel 20 formed through the flow restriction member 2 along the up-to-down direction, and quick insertion of the water pipe is enabled by means of the fastener 3.

In one embodiment, please refer to FIG. 2 to FIG. 6, the body 1 comprises a receiving portion 11, a first snap-fit wall 12 located on an upper side of the receiving portion 11, and an output portion 13 located on a lower side of the receiving portion 11. The receiving cavity 10 is formed through the receiving portion 11 and the first snap-fit wall 12. An outer diameter of the output portion 13 is smaller than an outer diameter of the receiving portion 11. The output portion 13 is a hollow tubular structure forming an output channel 130 for water flow to the water container 90.

The receiving portion 11 is cylindrical and defines a bottom wall 112. The flow restriction member 2 is accommodated in a lower space of the receiving portion 11 and abuts against the bottom wall 112. The receiving portion 11 further comprises a circumferential wall 113 protruding upward from the bottom wall 112.

The first snap-fit wall 12 is coaxial with the receiving portion 11, and a wall thickness of the first snap-fit wall 12 in a radial direction is smaller than a wall thickness of the receiving portion 11. The first snap-fit wall 12 is provided with a first snap-fit portion 121 protruding outward in the radial direction and a guide surface 123 arranged obliquely on an outer side thereof.

The flow restriction member 2 has a first protrusion 201 protruding downward from a bottom surface thereof. The body 1 has a bottom wall surface 1120 defining the receiving cavity 10 and a second protrusion 114 protruding upward from the bottom wall surface 1120. The first protrusion 201 and the second protrusion 114 are offset in the radial direction and have an overlapping portion in a height direction, thereby preventing abnormal noise caused by radial flow of water.

In the present embodiment, the first protrusion 201 is generally annular, and the second protrusion 114 is also generally annular. In one embodiment, both the first protrusion 201 and the second protrusion 114 protrude in a semicircular shape in a cross-section along the radial direction. A radius of the first protrusion 201 is smaller than a radius of the second protrusion 114. A distance from the second protrusion 114 to a central axis is greater than a distance from the first protrusion 201 to the central axis, so that the first protrusion 201 is located on an inner side of the second protrusion 114.

In one embodiment, the flow channel 20 comprises a first flow channel 202 located on the upper side and a second flow channel 203 located on the lower side. A radius of the first flow channel 202 is consistent from top to bottom. The second flow channel 203 has a flared shape with a larger diameter on an upper side and a smaller diameter on a lower side, thereby resulting in a smaller aperture diameter on the lower side with higher water pressure and a larger aperture diameter on the upper side, thus achieving effective control over flow rate and velocity and preventing splashing and overflowing of water at the spout of the water container during filling.

In the present embodiment, the flow restriction member 2 is made of an elastic material. In one embodiment, the flow restriction member 2 is capable of compressive deformation under an external force and has a recessed structure 204 recessed downward on a top surface thereof to further enhance control over the flow rate and velocity of water.

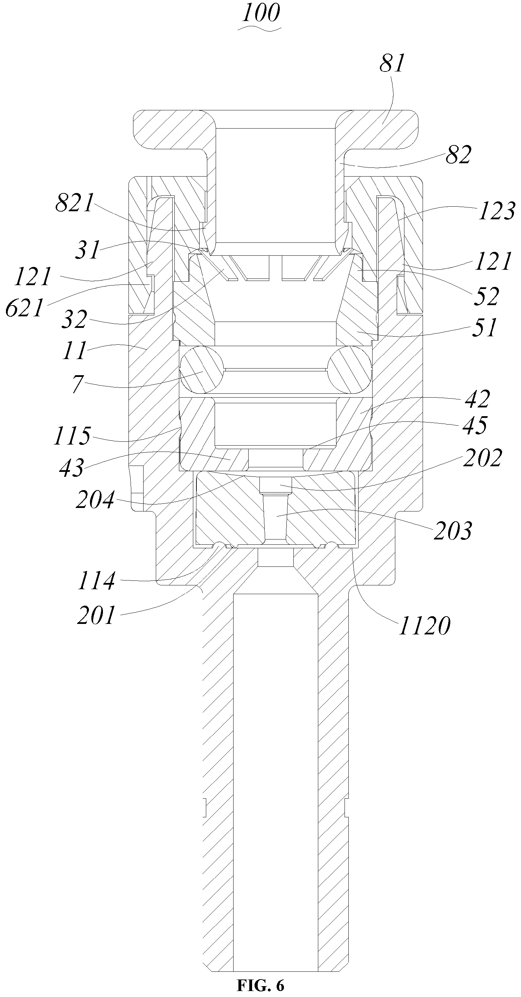

As shown in FIG. 6, in the radial direction, a degree of depression of the recessed structure 204 deepens as a distance to the central axis decreases. That is, in a direction from an outer periphery of the flow restriction member 2 towards the central axis thereof, the top surface of the flow restriction member 2 is lower on the inner side and higher on the outer side, thereby ensuring that a water flow rate at the water outlet end is controlled in a range of 120-260 ml/6s, thus preventing splashing and overflowing of water at the spout of the water container during filling.

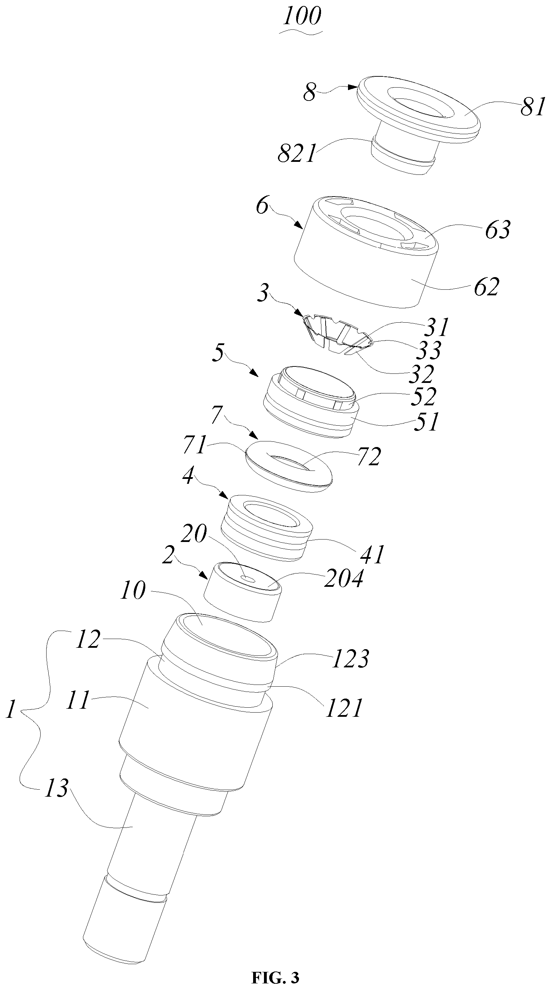

Please refer to FIG. 3, FIG. 4, and FIG. 6, the fastener 3 has a connecting wall 31 forming a closed loop and a plurality of claws 32 extending downward from the connecting wall 31. The plurality of claws 32 are arranged along a circumferential direction of the fastener 3. Each claw 32 has a tendency to converge towards the central axis in a direction from top to bottom, so that free ends thereof grip the water pipe inserted into the flow restriction device 100, thereby enabling quick insertion and fixation of the water pipe using the converging free ends of the claws 32.

The fastener 3 is further provided with a plurality of notches 33 formed by recessing from an outer end edge of the connecting wall 31 towards the free ends of the claws 32. The notches 33 correspond one-to-one with the claws 32. Top ends of the plurality of claws 32 are connected via the connecting wall 31, and bottom ends thereof are separated from each other to provide an elastic clamping force.

The flow restriction device 100 further has a stopper 4 arranged on the upper side of the flow restriction member 2. The stopper 4 has a mating groove 41 recessed on an outer peripheral wall thereof. The body 1 has a fixing portion 115 protruding into the receiving cavity 10 to cooperate with the mating groove 41.

The stopper 4 has an upper section 42 with a larger inner diameter and a lower section 43 with a smaller inner diameter, and a stop surface 45 facing upwards is formed at a junction of the upper section 42 and the lower section 43 to stop the water pipe.

The flow restriction device 100 further has a positioning structure configured to fix the fastener 3 in the body 1. The positioning structure is snap-fitted to the body 1 and fixes the fastener 3 in the receiving cavity 10.

The positioning structure comprises a first positioning member 5 accommodated in the receiving cavity 10 and a second positioning member 6 located on the upper side of the first positioning member 5. The fastener 3 is in overlapping engagement with a top end of the first positioning member 5 and is pressed downward by the second positioning member 6.

The first positioning member 5 comprises a base portion 51 located on the lower side and a projecting portion 52 protruding on the upper side of the base portion 51. The outer diameter of the projecting portion 52 is smaller than the outer diameter of the base portion 51, such that an outer peripheral surface of the projecting portion 52 is located on the inner side of an outer peripheral surface of the base portion 51.

Please refer to FIG. 2 to FIG. 7, the second positioning member 6 comprises a first limiting wall 61 located on the inner side and a second limiting wall 62 located on the outer side. The first limiting wall 61 and the second limiting wall 62 are coaxially arranged. The second positioning member 6 further has a top wall 63 connecting top ends of the first limiting wall 61 and the second limiting wall 62. Both the first limiting wall 61 and the second limiting wall 62 extend downward from the top wall 63, and a downward extension length of the second limiting wall 62 is greater than a downward extension length of the first limiting wall 61.

The wall thickness of the first limiting wall 61 decreases stepwise in the direction from top to bottom, forming a first step surface 611 on an upper side and a second step surface 612 on a lower side. The first limiting wall 61 further has an insertion portion 613 protruding on the lower side of the second step surface 612. In one embodiment, the second step surface 612 is inclined upward in the direction from the outer side towards the central axis, facilitating an installation of the connecting wall 31. A bottom surface 6130 of the insertion portion 613 abuts downward against an upper surface of the base portion 51.

The second limiting wall 62 is provided with a second snap-fit portion 621 protruding on an inner wall surface thereof. The second snap-fit portion 621 locks with the first snap-fit portion 121. In the present embodiment, a plurality of the second snap-fit portions 621 are distributed on the inner wall surface of the second limiting wall 62 along the circumferential direction. In other embodiments, the second snap-fit portion 621 can be a continuous, annular protruding structure formed along the circumferential direction.

The connecting wall 31 is sandwiched between the first positioning member 5 and the second positioning member 6 and is tightened by both. In one embodiment, a lower surface of the connecting wall 31 is in overlapping engagement with the projecting portion 52, and an upper surface of the connecting wall 31 is pressed by the second step surface 612, achieving clamping and fixation, thereby eliminating the need for conventional welding processes.

The flow restriction device 100 further has a sealing ring 7 located in the receiving cavity 10. The sealing ring 7 has a first rib 71 arranged on the outer side thereof and a second rib 72 arranged on the inner side thereof. The first rib 71 is pressed against an inner wall surface of the body 1, and the second rib 72 is configured to be pressed against the water pipe. In the present embodiment, the sealing ring 7 is sandwiched between the first positioning member 5 and the stopper 4 in the up-to-down direction, thereby preventing water leakage.

The flow restriction device 100 further has a guide member 8 inserted into the second positioning member 6 from the upper side. The guide member 8 has a guide portion 81 located on an upper side and a locking wall 82 located on a lower side. The locking wall 82 is inserted downward into an interior of the first limiting wall 61. The locking wall 82 has a locking portion 821 protruding on an outer surface thereof. The locking portion 821 locks with the first step surface 611 to achieve axial positioning of the guide member 8.

When the positioning structure is assembled into the body 1, an outer surface of the projecting portion 52 and an inner surface of the first snap-fit wall 12 are spaced apart to form a spacing gap for an insertion of the insertion portion 613. The first snap-fit wall 12 is inserted upward into a space formed between the first limiting wall 61 and the second limiting wall 62, guided smoothly by the guide surface 123. Thus, an interlocking structure is formed to ensure the structural stability of the flow restriction device 100 and form a good water flow channel.

In the present application, the flow restriction device 100 and the refrigeration apparatus achieve control over the flow rate and velocity of water, prevent splashing and overflowing of water at the spout of the water container 90, and realize quick insertion of the water pipe by arranging the flow restriction member 2 and the fastener 3 in the receiving cavity 10 of the body 1, setting the aperture diameter of the inlet end of the flow channel 20 of the flow restriction member 2 larger than the aperture diameter of the outlet end, and using the fastener 3 to snap-connect the water pipe in the flow restriction device 100.

It should be understood that although this specification is described according to embodiments, not every embodiment contains only one independent technical solution. This narrative manner of the specification is merely for clarity. Those skilled in the art should regard the specification as a whole, and technical solutions in various embodiments can also be appropriately combined to form other embodiments understandable to those skilled in the art.

The above embodiments are only used to illustrate technical solutions of the present application rather than to limit the present application. Although the present application has been described in detail with reference to preferred embodiments, those of ordinary skill in the art should understand that modifications or equivalent substitutions can be made to technical solutions of the present application without departing from a spirit and a scope of the technical solutions of the present application.

## Claims

1. A flow restriction device, **characterized in that** the flow restriction device comprises: a body for connecting to a water container; a flow restriction member located in the body; and a fastener located in the body, wherein the body is hollow to form a receiving cavity for accommodating the flow restriction member and the fastener, the flow restriction member has a flow channel formed therethrough along an up-to-down direction for water flow to pass through, the flow channel has an aperture diameter of an inlet end on an upper side that is larger than an aperture diameter of an outlet end on a lower side, and the fastener is used for clamping a water pipe in the flow restriction device.

2. The flow restriction device according to claim 1, wherein the flow restriction member has a first protrusion protruding downward from a bottom surface thereof, the body has a bottom wall surface defining the receiving cavity and a second protrusion protruding upward from the bottom wall surface, and the first protrusion and the second protrusion are offset in a radial direction.

3. The flow restriction device according to claim 2, wherein a radius of the first protrusion is smaller than a radius of the second protrusion, and a distance from the second protrusion to a central axis of the flow restriction device is greater than a distance from the first protrusion to the central axis, so that the first protrusion is located on an inner side of the second protrusion.

4. The flow restriction device according to claim 1, wherein the flow channel comprises a first flow channel located on an upper side and a second flow channel located on a lower side, and the second flow channel has a flared shape with a larger diameter at an upper end and a smaller diameter at a lower end.

5. The flow restriction device according to claim 1, wherein the flow restriction member is capable of compressive deformation under an external force and has a recessed structure recessed downward on a top surface thereof.

6. The flow restriction device according to claim 5, wherein in a radial direction, a degree of depression of the recessed structure deepens as a distance to a central axis decreases.

7. The flow restriction device according to claim 1, wherein the fastener has a connecting wall forming a closed loop and a plurality of claws extending downward from the connecting wall, each claw has a tendency to converge towards a central axis in a direction from top to bottom, so that free ends thereof grip the water pipe inserted into the flow restriction device.

8. The flow restriction device according to claim 7, wherein the flow restriction device further has a stopper arranged on an upper side of the flow restriction member, the stopper has a mating groove recessed on an outer peripheral wall thereof, and the body has a fixing portion protruding into the receiving cavity to cooperate with the mating groove.

9. The flow restriction device according to claim 1, wherein the flow restriction device further has a positioning structure configured to fix the fastener in the body, and the positioning structure is snap-fitted to the body and fixes the fastener in the receiving cavity.

10. The flow restriction device according to claim 9, wherein the positioning structure comprises a first positioning member accommodated in the receiving cavity and a second positioning member located on an upper side of the first positioning member, and the fastener is in overlapping engagement with a top end of the first positioning member and is pressed downward by the second positioning member.

11. The flow restriction device according to claim 10, wherein the fastener has a connecting wall forming a closed loop, and the connecting wall is sandwiched between the first positioning member and the second positioning member and is tightened by both.

12. The flow restriction device according to claim 10, wherein the first positioning member comprises a base portion located on a lower side and a projecting portion protruding on an upper side of the base portion, the second positioning member comprises a first limiting wall located on an inner side and a second limiting wall located on an outer side, an outer surface of the projecting portion and an inner surface of a first snap-fit wall of the body are spaced apart to form a spacing gap, an insertion portion of the first limiting wall is inserted into the spacing gap, and the first snap-fit wall is inserted upward into a space formed between the first limiting wall and the second limiting wall.

13. The flow restriction device according to any one of claims 1 to 12, wherein the flow restriction device further has a sealing ring located in the receiving cavity, the sealing ring has a first rib arranged on an outer side thereof and a second rib arranged on an inner side thereof, the first rib is pressed against an inner wall surface of the body, and the second rib is configured to be pressed against the water pipe.

14. A refrigeration apparatus, **characterized in that** the refrigeration apparatus comprises the flow restriction device according to any one of claims 1 to 13 and the water container connected to the flow restriction device.

15. The refrigeration apparatus according to claim 14, wherein the refrigeration apparatus further has a water distribution valve configured to distribute water flow to the water container, and the flow restriction device is arranged between the water distribution valve and the water container.
